# EUROPEAN PATENT APPLICATION

(11) **EP 4 763 483 A1**
(43) Date of publication of application: **24.06.2026**
(21) Application number: 25857100.9
(22) Date of filing: 22.05.2025
(51) Int. Cl.: B29C 65/00, B29C 31/08, B29D 99/00, H01M 50/105, B29L 31/00

(54) **APPARATUS FOR PROCESSING POUCH-TYPE BATTERY CELL CASE AND PROCESSING METHOD USING SAME**

(30) Priority: 21.08.2024 KR 20240112354
(71) Applicant: LG Energy Solution, Ltd., Seoul 07335 (KR)
(72) Inventor: SIM, Jae Yeong, Daejeon 34122 (KR); JEON, Sang Chul, Daejeon 34122 (KR)
(74) Representative: Plasseraud IP
(86) International application number: PCT/KR2025/006951
(87) International publication number: WO 2026/043012

(57) **Abstract**

Disclosed are a pouch-shaped battery cell case machining apparatus and a machining method using the same, and more particularly a pouch-shaped battery cell case machining apparatus including a die unit configured to allow a battery cell case including a pocket portion and an extension portion provided outside the pocket portion to be seated on the die unit, a gripping unit configured to transfer the extension portion of the battery cell case to one side while gripping the extension portion, and a cutting unit located between the die unit and the gripping unit, the cutting unit being configured to cut a part of the extension portion of the battery cell case that is being transferred, wherein the die unit is a conveyor configured to continuously move toward one side, and a machining method using the same.

## Description

### [Technical Field]

This application claims the benefit of priority to Korean Patent Application No. 2024-0112354 filed on August 21, 2024, the disclosure of which is incorporated herein by reference in its entirety.

The present invention relates to a pouch-shaped battery cell case machining apparatus and a machining method using the same, and more particularly to a pouch-shaped battery cell case machining apparatus capable of continuously cutting an extension portion of a pouch-shaped battery cell case and a machining method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

In a typical pouch-shaped secondary battery manufacturing process, a step of inserting an electrode assembly into a receiving space of a battery case made of a laminate sheet, a step of injecting an electrolyte solution into the battery case, a step of sealing the battery case, and an activation step are sequentially performed.

In the activation step, gas is generated by a chemical reaction between lithium and the electrolyte solution in the secondary battery, and this gas is collected in a gas pocket portion and then removed during a degassing process.

Once gas collection is completed, the gas pocket portion is no longer necessary in a finished secondary battery, and therefore a part of the case including the gas pocket portion is cut away through pre-cutting and main cutting.

However, pre-cutting including main cutting is generally performed with the battery case in a stationary state, resulting in a slow process speed.

### (Prior Art Document)

(Patent Document 1) Korean Patent Application Publication No. 10-2022-0064751

### [Disclosure]

### [Technical Problem]

The present invention has been made in view of the above problems, and it is an object of the present invention to provide a pouch-shaped battery cell case machining apparatus capable of performing a cutting process during the continuous transfer of pouch-shaped battery cell cases when cutting pouch-shaped battery cell cases after an activation step and a machining method using the same.

### [Technical Solution]

A pouch-shaped battery cell case machining apparatus according to the present invention to accomplish the above object includes a die unit (100) configured to allow a battery cell case (12) including a pocket portion (12a) and an extension portion (12b) provided outside the pocket portion (12a) to be seated on the die unit, a gripping unit (200) configured to transfer the extension portion (12b) of the battery cell case (12) to one side while gripping the extension portion, and a cutting unit (300) located between the die unit (100) and the gripping unit (200), the cutting unit being configured to cut a part of the extension portion (12b) of the battery cell case (12) that is being transferred, wherein the die unit (100) is a conveyor configured to continuously move toward one side.

Also, in the pouch-shaped battery cell case machining apparatus according to the present invention, the gripping unit (200) may include a first gripping unit (210) configured to be in tight contact with one surface of the extension portion (12b) of the battery cell case (12) and a second gripping unit (220) configured to be in tight contact with another surface of the extension portion (12b) of the battery cell case (12).

Also, in the pouch-shaped battery cell case machining apparatus according to the present invention, the first gripping unit (210) may include a plurality of first pulleys (211) and a first belt (212) located so as to wrap around the first pulleys (211), and the second gripping unit (220) may include a plurality of second pulleys (221) and a second belt (222) located so as to wrap around the second pulleys (221).

Also, in the pouch-shaped battery cell case machining apparatus according to the present invention, the cutting unit (300) may include a first disc-shaped cutting member (310) configured to be in tight contact with one surface of the extension portion (12b) of the battery cell case (12) at a right angle thereto and a second disc-shaped cutting member (320) configured to be in tight contact with the other surface of the extension portion (12b) of the battery cell case (12) at a right angle thereto, and wherein the first disc-shaped cutting member (310) and the second disc-shaped cutting member (320) may be configured to rotate together to continuously cut the extension portion (12b) of the battery cell case (12).

Also, in the pouch-shaped battery cell case machining apparatus according to the present invention, the first disc-shaped cutting member (310) may include a 1a body (311) having an inclined surface (311a) provided at an edge, the outer diameter of the 1a body that increases toward the gripping unit (200), and a 1b body (312) located on one side of the 1a body (311), the outer diameter of the 1b body being less than the outer diameter of the 1a body (311), and wherein the second disc-shaped cutting member (320) may include a 2a body (321) with a depression (321a) formed along the center of a circumferential surface, a first partition wall (321b) provided on one side of the depression (321a), and a second partition wall (321c) formed on the other side of the depression (321a), and wherein the 1a body (311) may be configured to engage with the first partition wall (321b) to cut a part of the extension portion (12b) of the battery cell case (12).

Also, in the pouch-shaped battery cell case machining apparatus according to the present invention, the first disc-shaped cutting member (310) may further include a 1c body (313) located on one side of the 1b body (312), the 1c body (313) being provided on a circumferential surface thereof with a first circular-band-shaped tight contact member (313a) configured to be in tight contact with the one surface of the extension portion (12b) of the battery cell case (12), and the second disc-shaped cutting member (320) may further include a 2b body (322) located on one side of the 2a body (321), the 2b body (322) being provided on a circumferential surface thereof with a second circular-band-shaped tight contact member (322a) configured to be in tight contact with the other surface of the extension portion (12b) of the battery cell case (12).

Also, in the pouch-shaped battery cell case machining apparatus according to the present invention, the first circular-band-shaped tight contact member (313a) and the second circular-band-shaped tight contact member (322a) may include silicone or rubber.

Also, in the pouch-shaped battery cell case machining apparatus according to the present invention, the width of an outer circumferential surface of the 1c body (313) may be less than the width of an outer circumferential surface of the second circular-band-shaped tight contact member (322a), and wherein when a part of the extension portion (12b) of the battery cell case (12) is cut, the outer circumferential surface of the 1c body (313) may be located so as to overlap the outer circumferential surface of the second circular-band-shaped tight contact member (322a).

Also, in the pouch-shaped battery cell case machining apparatus according to the present invention, the second partition wall (321c) of the 2a body (321) may be configured to support the other surface of the extension portion (12b) of the battery cell case (12) when the extension portion (12b) of the battery cell case (12) is cut.

Also, the pouch-shaped battery cell case machining apparatus according to the present invention may further include a guide unit (400) provided in front of the cutting unit (300), wherein the guide unit is configured to guide the extension portion (12b) of the battery cell case (12) to the cutting unit (300).

Also, in the pouch-shaped battery cell case machining apparatus according to the present invention, the guide unit (400) may include a first guide plate (410) configured to be located above the extension portion (12b) of the battery cell case (12) and a second guide plate (420) configured to be located under the extension portion (12b) of the battery cell case (12).

Also, in the pouch-shaped battery cell case machining apparatus according to the present invention, a front entrance side of the first guide plate (410) may be curved toward an upper side with a predetermined radius of curvature, and a front entrance side of the second guide plate (420) may be curved toward a lower side with a predetermined radius of curvature.

Also, the pouch-shaped battery cell case machining apparatus according to the present invention may further include an air blowing unit (500) configured to blow air toward the extension portion (12b) of the battery cell case (12).

Also, the pouch-shaped battery cell case machining apparatus according to the present invention may further include a scrap collection unit (600) configured to collect scrap, wherein scrap includes a cut part of the extension portion (12b) of the battery cell case (12).

In addition, a pouch-shaped battery cell case machining method according to the present invention includes a first step of continuously supplying in one direction a battery cell case including a pocket portion and an extension portion provided outside the pocket portion, a second step of continuously transferring in one direction the supplied extension portion of the battery cell case in the first step while gripping the extension portion of the battery cell case, and a third step of continuously cutting a part of the transferred extension portion of the battery cell case in the second step.

### [Advantageous Effects]

In a pouch-shaped battery cell case machining apparatus according to the present invention and a machining method using the same, the pouch-shaped battery cell case machining apparatus includes a pair of gripping units in tight contact with both surfaces of an extension portion of a battery cell case and a pair of disc-shaped cutting units configured to rotate, whereby a cutting process may be performed while the pouch-shaped battery cell case is continuously transferred, which may contribute to improving the production speed of pouch-shaped secondary batteries.

Also, in the pouch-shaped battery cell case machining apparatus according to the present invention and the machining method using the same, the pouch-shaped battery cell case machining apparatus further includes a guide unit provided in front of the gripping units to guide the extension portion of the battery cell case, whereby it is possible to guide the extension portion of the battery cell case to the gripping units without being folded even if a part of the extension portion of the battery cell case is slightly bent upward or downward.

### [Description of Drawings]

FIG. 1 is a plan view of a pouch-shaped battery cell.
FIG. 2 is a conceptual view of a pouch-shaped battery cell case machining apparatus according to the present invention.
FIG. 3 is a perspective view showing that a pouch-shaped battery cell case is cut by the pouch-shaped battery cell case machining apparatus shown in FIG. 2.
FIG. 4 is a front view showing that the pouch-shaped battery cell case is cut by the pouch-shaped battery cell case machining apparatus shown in FIG. 2.
FIG. 5 is an enlarged perspective view of a gripping unit constituting the pouch-shaped battery cell case machining apparatus according to the present invention.
FIG. 6 is an enlarged perspective view of a cutting unit constituting the pouch-shaped battery cell case machining apparatus according to the present invention.
FIG. 7 is an enlarged front view of the cutting unit constituting the pouch-shaped battery cell case machining apparatus according to the present invention.
FIG. 8 is a sectional view illustrating a guide unit constituting the pouch-shaped battery cell case machining apparatus according to the present invention.
FIG. 9 is an enlarged perspective view of the guide unit constituting the pouch-shaped battery cell case machining apparatus according to the present invention.
FIG. 10 is a sectional view showing a modification of the guide unit constituting the pouch-shaped battery cell case machining apparatus according to the present invention.
FIG. 11 is a flowchart of a pouch-shaped battery cell case machining method according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped battery cell case machining apparatus according to the present invention and a machining method using the same will be described.

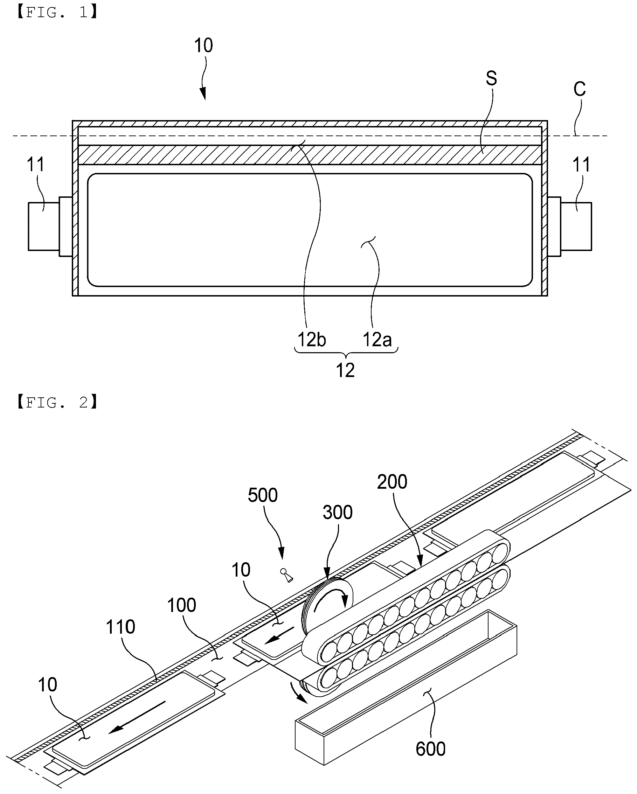

FIG. 1 is a plan view of a pouch-shaped battery cell. Referring to FIG. 1, the pouch-shaped battery cell 10 includes an electrode assembly (not shown) having a pair of electrode leads 11 located opposite each other and a battery cell case 12 having a pocket portion 12a configured to receive the electrode assembly (not shown) and an extension portion 12b provided outside the pocket portion 12a.

A main sealing portion S configured to prevent leakage of an electrolyte solution is located in the extension portion 12b, and a cutting line C is located outside the main sealing portion S.

That is, in the present invention, during a main cutting step, which is a step after an activation process, a degassing process, pre-cutting, and main sealing, a part of the extension portion 12b is cut along the cutting line C of the extension portion 12b located outside the pocket portion 12a of the battery cell case 12. Of course, the apparatus according to the present invention may also be used in the pre-cutting step of the battery cell case 12.

Meanwhile, the electrode assembly (not shown) received in the pocket portion 12a may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

In addition, the pocket portion 12a of the battery cell case 12 is formed using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

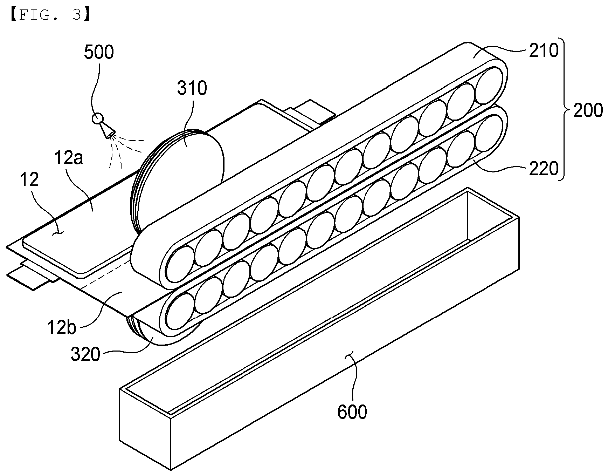

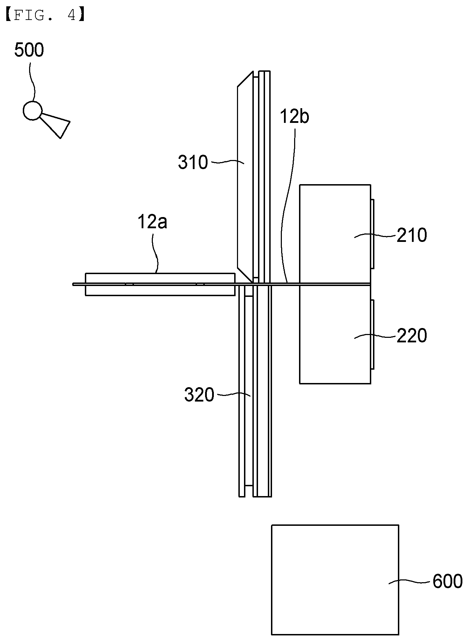

FIG. 2 is a conceptual view of a pouch-shaped battery cell case machining apparatus according to the present invention, FIG. 3 is a perspective view showing that a pouch-shaped battery cell case is cut by the pouch-shaped battery cell case machining apparatus shown in FIG. 2, and FIG. 4 is a front view showing that the pouch-shaped battery cell case is cut by the pouch-shaped battery cell case machining apparatus shown in FIG. 2.

Referring to FIGs. 1 to 4, the pouch-shaped battery cell case machining apparatus according to the present invention includes a die unit 100, a gripping unit 200, and a cutting unit 300, and may include at least one of a guide unit 400, an air blowing unit 500, and a scrap collection unit 600 as needed.

First, the battery cell case 12, which includes the pocket portion 12a and the extension portion 12b provided outside the pocket portion 12a, is seated on the die unit 100. In this case, the die unit 100 is preferably a conveyor that is continuously movable toward one side (in an 8 o'clock direction of FIG. 2) such that a part of the extension portion 12b can be cut during a process of continuously supplying battery cell cases 12.

In addition, it is preferable for a guide bar 110 to be provided in the vicinity of the edge of one side of an upper surface of the die unit 100 so as to extend in a longitudinal direction. When the guide bar 110 is provided, it is possible to easily align battery cell cases 12. For example, when one side surface of the pocket portion 12a is located in tight contact with one side surface of the guide bar 110, battery cell cases 12 to be machined may be accurately aligned.

The gripping unit 200 is located at the edge of one side (in a 4 o'clock direction of FIG. 2) of the die unit 100 to transfer the extension portion 12b of the battery cell case 12 to one side while gripping the same.

The cutting unit 300 is located between the die unit 100 and the gripping unit 200 to cut a part of the extension portion 12b of the battery cell case 12 that is being transferred along the cutting line C.

In addition, the guide unit 400, which guides the extension portion 12b of the battery cell case 12 to the cutting unit 300, is located in front of the cutting unit 300.

The details of the gripping unit 200, the cutting unit 300, and the guide unit 400 will be described later.

Meanwhile, when the extension portion 12b of the battery cell case 12 is cut, not only may a part of the extension portion 12b, i.e., scrap, be cut along the cutting line C, but also fine debris may be generated during the cutting process.

If the next process is performed in the state in which fine debris adheres to the battery cell case 12 or the electrode leads, the battery cell may be defective. Furthermore, if fine debris adheres to the cutting unit 300, precise cutting may be difficult.

Therefore, it is preferable to provide an air blowing unit 500 configured to prevent debris generated during the cutting process from adhering to the battery cell case 12, the electrode leads, and the cutting unit 300. The air blowing unit 500 may be located so as to blow air toward the extension portion 12b of the battery cell case 12 and the cutting unit 300, and the type of the air blowing unit or the air blowing method is not particularly limited as long as it is possible to blow air.

The scrap collection unit 600 is configured to collect scrap, which is a cut part of the extension portion 12b, and may have a box-shaped structure with an open top and a certain volume.

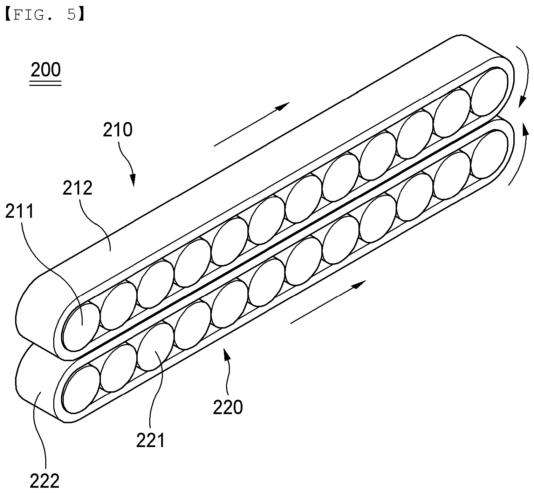

FIG. 5 is an enlarged perspective view of the gripping unit constituting the pouch-shaped battery cell case machining apparatus according to the present invention. The gripping unit will be described in detail with reference to FIGs. 3 to 5.

The gripping unit 200, which transfers the extension portion 12b of the battery cell case 12 in a direction toward the cutting unit 300 while gripping the same, includes a first gripping unit 210 in tight contact with one surface of the extension portion 12b of the battery cell case 12 and a second gripping unit 220 in tight contact with the other surface of the extension portion 12b of the battery cell case 12.

The first gripping unit 210 includes a plurality of first pulleys 211 configured to be rotated in a clockwise direction (in FIG. 5) and a first belt 212 located so as to wrap around the first pulleys 211. Although not shown in the figures, a separate driving means (not shown) configured to rotate the first pulleys 211 is connected to the first pulleys 211. In addition, although twelve first pulleys 211 are shown, this is only an example, and the number or position of the first pulleys 211 is not particularly limited as long as the first belt 212 can be rotated and the first belt 212 can be brought into tight contact with one surface (upper surface) of the extension portion 12b of the battery cell case 12.

The second gripping unit 220 includes a plurality of second pulleys 221 configured to be rotated in a counterclockwise direction (in FIG. 5) and a second belt 222 located so as to wrap around the second pulleys 221. Although not shown in the figures, a separate driving means (not shown) configured to rotate the second pulleys 221 is connected to the second pulleys 221. In addition, although twelve second pulleys 221 are shown, this is only an example, and the number or position of the second pulleys 221 is not particularly limited as long as the second belt 222 can be rotated and the second belt 222 can be brought into tight contact with the other surface (lower surface) of the extension portion 12b of the battery cell case 12.

As such, gripping unit 200 that moves the battery cell case 12 in the direction toward the cutting unit 300 in the state in which one surface and the other surface of the extension portion 12b of the battery cell case 12 are in tight contact with each other is provided, whereby it is possible to always move the battery cell case 12 at a constant speed.

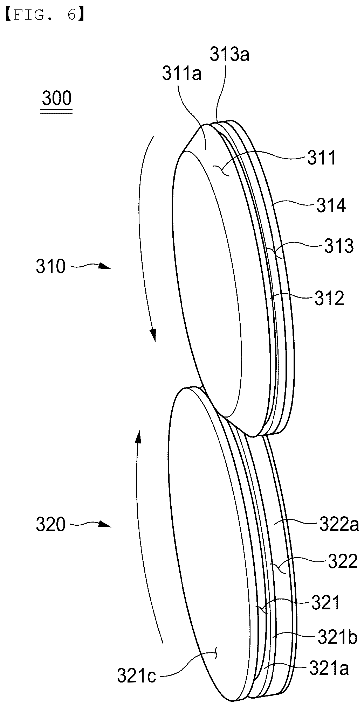

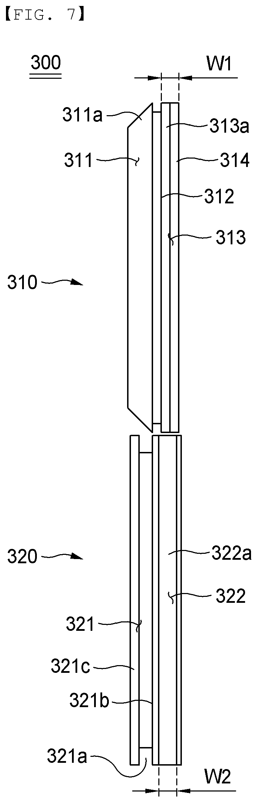

FIG. 6 is an enlarged perspective view of the cutting unit constituting the pouch-shaped battery cell case machining apparatus according to the present invention, and FIG. 7 is an enlarged front view of the cutting unit constituting the pouch-shaped battery cell case machining apparatus according to the present invention.

The cutting unit will be described in detail with reference to FIGs. 3, 4, 6, and 7.

The cutting unit 300 is configured to cut a part of the extension portion 12b of the battery cell case 12 along the cutting line of the extension portion 12b, and includes a first disc-shaped cutting member 310 in tight contact with one surface of the extension portion 12b of the battery cell case 12 at a right angle thereto and a second disc-shaped cutting member 320 in tight contact with the other surface of the extension portion 12b of the battery cell case 12 at a right angle thereto. Although not shown in the figures, a separate driving member (not shown) configured to rotate the first cutting member 310 in the counterclockwise direction (in FIG. 6) and to rotate the second cutting member 320 in the clockwise direction (in FIG. 6) is provided.

Specifically, the first cutting member 310 may include a 1a body 311 having an inclined surface 311a provided at the edge thereof, the outer diameter of the 1a body being gradually increased toward the gripping unit 200, a 1b body 312 located on one side of the 1a body 311, the outer diameter of the 1b body 312 being less than that of the 1a body 311, and a 1c body 313 located on one side of the 1b body 312.

Here, it is preferable for a first circular-band-shaped tight contact member 313a to be further provided on a circumferential surface of the 1c body 313 so as to be in tight contact with one surface of the extension portion 12b of the battery cell case 12. In this case, the first tight contact member 313a may be made of silicone or rubber having excellent adhesion and a certain degree of elasticity.

The second cutting member 320 may include a 2a body 321 and a 2b body 322 located on one side of the 2a body 321.

In this case, it is preferable for the 2a body 321 to include a depression 321a formed along the center of the circumferential surface thereof, a first partition wall 321b provided on one side of the depression 321a, and a second partition wall 321c formed on the other side of the depression 321a.

In addition, it is preferable for a second circular-band-shaped tight contact member 322a to be further provided on a circumferential surface of the second tight contact member 322a so as to be in tight contact with the other surface of the extension portion 12b of the battery cell case 12. In this case, the second tight contact member 322a may be made of silicone or rubber having excellent adhesion and a certain degree of elasticity.

As the cutting unit 300 is configured as described above, the 1a body 311 and the first partition wall 321b engage with each other, whereby a part of the extension portion 12b of the battery cell case 12 is continuously cut.

Furthermore, when a part of the extension portion 12b of the battery cell case 12 is cut, an outer circumferential surface of the 1c body 313 and an outer circumferential surface of the second tight contact member 322a overlap each other, and when the width W1 of the outer circumferential surface of the 1c body 313 is less than the width W2 of the outer circumferential surface of the second tight contact member 322a, the adjustment of the overlapping area between the 1a body 311, which acts as a cutter, and the first partition wall 321b is easier.

In other words, since the second tight contact member 322a has a certain degree of elasticity, it is possible for the second tight contact member to receive a part of the 1c body 313, whereby it is possible to adjust the position of the end of the edge of the 1a body 311 received in the depression 321a, which may correspond to a tolerance that may occur during a process of manufacturing the first cutting member 310 and the second cutting member 320.

In addition, when a part of the extension portion 12b of the battery cell case 12 is cut, it is preferable for an upper end of the second partition wall 321c of the 2a body 321 to have a height at which the upper end is in tight contact with the other surface (lower surface) of the extension portion 12b of the battery cell case 12 such that the extension portion 12b of the battery cell case 12 can maintain a horizontal state.

Meanwhile, it is obvious that the rotational speed of the first cutting member 310 and the second cutting member 320 must be controlled to be the same as the transfer speed of the battery cell case 12 by the gripping unit 200.

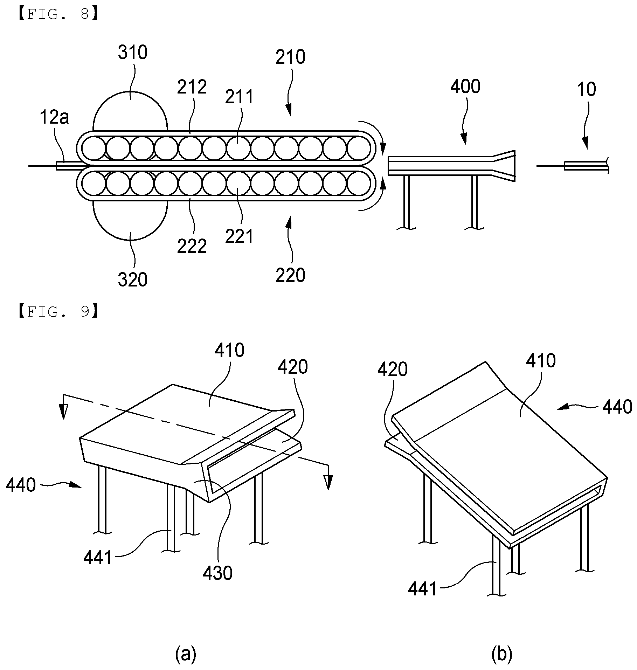

FIG. 8 is a sectional view illustrating the guide unit constituting the pouch-shaped battery cell case machining apparatus according to the present invention, and FIG. 9 is an enlarged perspective view of the guide unit constituting the pouch-shaped battery cell case machining apparatus according to the present invention.

Referring to FIGs. 8 and 9, the guide unit 400, which guides the extension portion 12b of the battery cell case 12 to the cutting unit 300, is located in front of the cutting unit 300.

Specifically, the guide unit 400 may include a first guide plate 410 located above the extension portion 12b of the battery cell case 12 and a second guide plate 420 located under the extension portion 12b of the battery cell case 12.

In this case, an entrance side of the guide unit 400 is gradually widened toward the front such that the extension portion 12b of the battery cell case 12 can be easily introduced into the guide unit 400. In other words, a front entrance side of the first guide plate 410 is curved toward an upper side with a predetermined radius of curvature, and a front entrance side of the second guide plate 420 is curved toward a lower side with a predetermined radius of curvature.

Therefore, even if a part of the extension portion 12b of the battery cell case 12 is slightly bent upward or downward, the extension portion may easily be introduced into the guide unit 400, which enables the extension portion 12b of the battery cell case 12 to be guided to the gripping unit 200 while fundamentally preventing folding of the same.

Meanwhile, the first guide plate 410 and the second guide plate 420 disposed side by side in a vertical direction are connected to each other by a single connection portion 430 on one side of each thereof, and the second guide plate 420 may be stably located by a support portion 440 constituted by a plurality of first support portions 441 provided on a lower surface thereof.

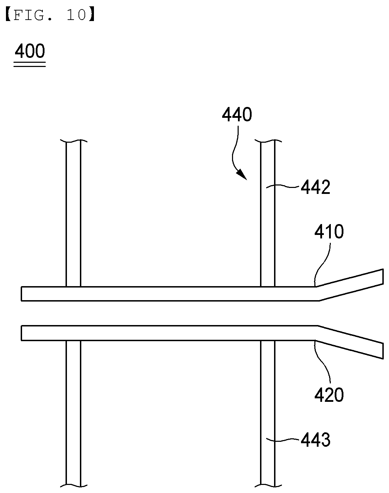

Of course, as long as the first guide plate 410 and the second guide plate 420 can be stably supported, any changes are possible. For example, as shown in FIG. 10, which is a sectional view showing a modification of the guide unit constituting the pouch-shaped battery cell case machining apparatus according to the present invention, the first guide plate 410 and the second guide plate 420 are disposed side by side in the vertical direction, one or more second support portions 442 extending upward may be located on an upper surface of the first guide plate 410, and one or more third support portions 443 extending downward may be located on the lower surface of the second guide plate 420.

In this case, the connection portion 430 may be provided, as shown in FIG. 9.

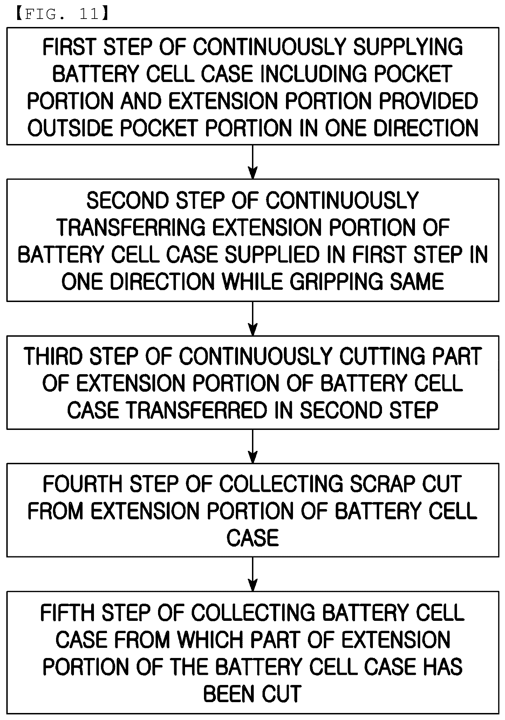

Next, a pouch-shaped battery cell case machining method according to the present invention will be described. FIG. 11 is a flowchart of a pouch-shaped battery cell case machining method according to the present invention.

Referring to FIGs. 1 to 8 and 11, the pouch-shaped battery cell case machining method according to the present invention may include a first step of continuously supplying a battery cell case 12 including a pocket portion 12a and an extension portion 12b provided outside the pocket portion 12a in one direction, a second step of continuously transferring the extension portion 12b of the battery cell case 12 supplied in the first step in one direction while gripping the same, and a third step of continuously cutting a part of the extension portion 12b of the battery cell case 12 transferred in the second step.

In addition, if necessary, the method may further include a fourth step of collecting scrap cut from the extension portion 12b of the battery cell case 12 and a fifth step of collecting the battery cell case 12 from which a part of the extension portion 12b of the battery cell case 12 has been cut.

In addition, the method may further include a step of guiding the extension portion 12b of the battery cell case 12 rearward between the first step and the second step.

Furthermore, the method may further include a step of blowing air toward the extension portion 12b of the battery cell case 12 after the second step.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Pouch-shaped battery cell
11: Electrode lead
12: Battery cell case
12a: Pocket portion 12b: Extension portion
100: Die unit
110: Guide bar
200: Gripping unit
210: First gripping unit
211: First pulley 212: First belt
220: Second gripping unit
221: Second pulley 222: Second belt
300: Cutting unit
310: First cutting member
311: 1a body 311a: Inclined surface
312: 1b body 313: 1c body
313a: First tight contact member
320: Second cutting member
321: 2a body 321a: Depression
321b: First partition wall 321c: Second partition wall
322: 2b body 322a: Second tight contact member
400: Guide unit
410: First guide plate
420: Second guide plate
430: Connection portion
440: Support portion
441: First support portion 442: Second support portion
443: Third support portion
500: Air blowing unit
600: Scrap collection unit
S: Main sealing portion
C: Cutting line
W1: Width of outer circumferential surface of 1c body
W2: Width of outer circumferential surface of second tight contact member

## Claims

1. A pouch-shaped battery cell case machining apparatus comprising:
a die unit configured to allow a battery cell case comprising a pocket portion and an extension portion provided outside the pocket portion to be seated on the die unit;
a gripping unit configured to transfer the extension portion of the battery cell case to one side while gripping the extension portion; and
a cutting unit located between the die unit and the gripping unit, the cutting unit being configured to cut a part of the extension portion of the battery cell case that is being transferred, wherein
the die unit is a conveyor configured to continuously move toward one side.

2. The pouch-shaped battery cell case machining apparatus according to claim 1, wherein the gripping unit comprises:
a first gripping unit configured to be in tight contact with one surface of the extension portion of the battery cell case; and
a second gripping unit configured to be in tight contact with another surface of the extension portion of the battery cell case.

3. The pouch-shaped battery cell case machining apparatus according to claim 2, wherein
the first gripping unit comprises a plurality of first pulleys and a first belt located so as to wrap around the first pulleys, and
the second gripping unit comprises a plurality of second pulleys and a second belt located so as to wrap around the second pulleys.

4. The pouch-shaped battery cell case machining apparatus according to claim 2, wherein the cutting unit comprises:
a first disc-shaped cutting member configured to be in tight contact with the one surface of the extension portion of the battery cell case at a right angle thereto, and
a second disc-shaped cutting member configured to be in tight contact with the other surface of the extension portion of the battery cell case at a right angle thereto, and
wherein the first disc-shaped cutting member and the second disc-shaped cutting member are configured to rotate together to continuously cut the extension portion of the battery cell case.

5. The pouch-shaped battery cell case machining apparatus according to claim 4, wherein
the first disc-shaped cutting member comprises a 1a body having an inclined surface provided at an edge, an outer diameter of the 1a body that increases toward the gripping unit, and a 1b body located on one side of the 1a body, an outer diameter of the 1b body being less than the outer diameter of the 1a body, and
wherein the second disc-shaped cutting member comprises a 2a body with a depression formed along a center of a circumferential surface, a first partition wall provided on one side of the depression, and a second partition wall formed on the other side of the depression, and
wherein the 1a body is configured to engage with the first partition wall to cut a part of the extension portion of the battery cell case.

6. The pouch-shaped battery cell case machining apparatus according to claim 5, wherein
the first disc-shaped cutting member further comprises a 1c body located on one side of the 1b body, the 1c body being provided on a circumferential surface thereof with a first circular-band-shaped tight contact member configured to be in tight contact with the one surface of the extension portion of the battery cell case, and
the second disc-shaped cutting member further comprises a 2b body located on one side of the 2a body, the 2b body being provided on a circumferential surface thereof with a second circular-band-shaped tight contact member configured to be in tight contact with the other surface of the extension portion of the battery cell case.

7. The pouch-shaped battery cell case machining apparatus according to claim 6, wherein the first circular-band-shaped tight contact member and the second circular-band-shaped tight contact member include silicone or rubber.

8. The pouch-shaped battery cell case machining apparatus according to claim 7, wherein
a width of an outer circumferential surface of the 1c body is less than a width of an outer circumferential surface of the second circular-band-shaped tight contact member, and
wherein when a part of the extension portion of the battery cell case is cut, the outer circumferential surface of the 1c body is located so as to overlap the outer circumferential surface of the second circular-band-shaped tight contact member.

9. The pouch-shaped battery cell case machining apparatus according to claim 5, wherein the second partition wall of the 2a body is configured to support the other surface of the extension portion of the battery cell case when the extension portion of the battery cell case is cut.

10. The pouch-shaped battery cell case machining apparatus according to claim 2, further comprising a guide unit provided in front of the cutting unit, wherein the guide unit is configured to guide the extension portion of the battery cell case to the cutting unit.

11. The pouch-shaped battery cell case machining apparatus according to claim 10, wherein the guide unit comprises:
a first guide plate configured to be located above the extension portion of the battery cell case; and
a second guide plate configured to be located under the extension portion of the battery cell case.

12. The pouch-shaped battery cell case machining apparatus according to claim 11, wherein
a front entrance side of the first guide plate is curved toward an upper side with a predetermined radius of curvature, and
a front entrance side of the second guide plate is curved toward a lower side with a predetermined radius of curvature.

13. The pouch-shaped battery cell case machining apparatus according to claim 2, further comprising an air blowing unit configured to blow air toward the extension portion of the battery cell case.

14. The pouch-shaped battery cell case machining apparatus according to claim 2, further comprising a scrap collection unit configured to collect scrap, wherein scrap includes a cut part of the extension portion of the battery cell case.

15. A pouch-shaped battery cell case machining method comprising:
a first step of continuously supplying in one direction a battery cell case comprising a pocket portion and an extension portion provided outside the pocket portion;
a second step of continuously transferring in one direction the supplied extension portion of the battery cell case in the first step while gripping the extension portion of the battery cell case; and
a third step of continuously cutting a part of the transferred extension portion of the battery cell case in the second step.
